# EUROPÄISCHE PATENTSCHRIFT

(11) **EP 2 147 224 B1**
(45) Veröffentlichungstag und Bekanntmachung des Hinweises auf die Patenterteilung: **16.11.2011**
(21) Anmeldenummer: 08736522.7
(22) Anmeldetag: 24.04.2008
(51) Int. Cl.: F16D 25/00

(54) **SENSORANORDNUNG FÜR EINE KUPPLUNGSVORRICHTUNG**
SENSOR ARRANGEMENT FOR A CLUTCH DEVICE
ENSEMBLE DE CAPTEURS POUR UN DISPOSITIF D'EMBRAYAGE

(30) Priorität: 15.05.2007 DE 102007022777
(43) Veröffentlichungstag der Anmeldung: 27.01.2010
(73) Patentinhaber: ZF Friedrichshafen AG, 88038 Friedrichshafen (DE)
(72) Erfinder: FÜHRER, Kim, 88131 Lindau (DE)
(86) Internationale Anmeldenummer: PCT/EP2008/054964
(87) Internationale Veröffentlichungsnummer: WO 2008/138722

(56) Entgegenhaltungen:
- EP-A- 1 923 591
- DE-A1- 10 039 242
- DE-A1- 19 714 775
- DE-A1-102004 003 287
- FR-A- 2 496 204
- US-A- 5 058 718

## Beschreibung

Die vorliegende Erfindung betrifft eine Sensoranordnung für eine Kupplungsvorrichtung nach der im Oberbegriff von Anspruch 1 näher definierten Art. Die vorliegende Erfindung betrifft ferner eine Kupplungsvorrichtung mit einer solchen Sensoranordnung.

Aus dem Stand der Technik sind Sensoranordnungen bekannt, welche in erster Linie der Wegsensierung bzw. der Positionserfassung dienen. So wird in der DE 10 2004 027 117 A1 eine Einrichtung zur Erfassung der Wegposition eines Kupplungskolbens zur Kupplungsbetätigung, der in einer rotierenden Kupplung axial verschiebbar angeordnet ist, vorgeschlagen, bei der die Erfassung der Wegposition des Kupplungskolbens berührungslos erfolgt. Die Sensoreinrichtung umfasst hierbei einen im Getriebegehäuse angeordneten Sensor zur Erfassung der Lage eines Magneten, der vorzugsweise am Kupplungskolben angeordnet ist.

Die DE 100 18 677 A1 beschreibt ein Kupplungssystem mit einer Reibungskupplung und einer zugehörigen Betätigungseinrichtung. Eine Messanordnung umfasst einen Spulenkörper und ein Messglied. Das Messglied ist mit einem Kupplungsausrückkolben bewegungsverkoppelt und weist ein Magnetelement auf. Bei einer axialen Bewegung des Kupplungsausrückkolbens wirkt das Magnetelement mit dem Spulenkörper derart zusammen, dass über elektrische Leitungen ein die axiale Position des Magnetelements und somit des Kupplungsausrückkolbens repräsentierendes elektrisches Signal an eine Steuer- bzw. Regeleinheit übertragen wird.

Die nicht vorveröffentlichte Anmeldung der Anmelderin mit dem Aktenzeichen 10 2006 054 401 offenbart eine Sensoranordnung für eine Kupplungsvorrichtung. Die Sensoranordnung umfasst ein separates Sensorteil, welches einen Befestigungsabschnitt, einen Verbindungsabschnitt, einen Positionssensor und eine Signalleitung umfasst. Über den Befestigungsabschnitt kann das Sensorteil an einem Getriebe- bzw. Kupplungsgehäuse befestigt werden. Der Positionssensor dient zur Messung einer axialen Bewegung eines Ausrückzylinders der Kupplungsvorrichtung, wobei ein die Position des Ausrückzylinders repräsentierendes Signal über die Signalleitung an eine Steuerungselektronik übermittelt wird. Das Sensorteil ist derart ausgebildet, dass der Befestigungsabschnitt und der Verbindungsabschnitt in einer gleichbleibenden Anordnung zueinander ausgerichtet sind, so dass der Verbindungsabschnitt automatisch mit der Steuerungselektronik verbunden ist, wenn der Befestigungsabschnitt an dem Getriebe- bzw. Kupplungsgehäuse befestigt ist. Somit wird bereits bei der Montage des Sensorteiles sichergestellt, dass die Signalleitung mit der Steuerelektronik sicher verbunden wird.

Ein Nachteil der Sensoranordnungen aus dem Stand der Technik ist, dass der Sensor zur Positionsbestimmung eines Kupplungsausrückers von außen nicht mehr zugänglich ist, wenn das Getriebe an einer Antriebseinheit, beispielsweise einem Verbrennungsmotor, angeflanscht ist. Bei einem Ausfall des Sensors muss folglich das Getriebe ausgebaut werden, damit der Sensor getauscht werden kann.

Der vorliegenden Erfindung liegt die Aufgabe zugrunde, eine verbesserte Sensoranordnung, insbesondere für eine Kupplungsvorrichtung zu schaffen, durch welche die Nachteile des Stands der Technik beseitigt werden.

Die der Erfindung zugrunde liegende Aufgabe wird durch eine, auch die kennzeichnenden Merkmale des Hauptanspruchs aufweisende, gattungsgemäße Sensoranordnung gelöst.

Die erfindungsgemäße Sensoranordnung, insbesondere für eine Kupplungsvorrichtung für beispielsweise ein Kraftfahrzeug, weist ein Gehäuse und ein Sensorteil auf. Das Sensorteil umfasst zumindest einen Sensor zur Erfassung der Position eines beweglichen Teils der Kupplungsvorrichtung, wobei der bewegliche Teil der Kupplungsvorrichtung beispielsweise als axial verschiebbarer Kupplungskolben zur Kupplungsbetätigung ausgebildet sein kann. Das Gehäuse weist eine Aussparung für das Sensorteil auf und das Sensorteil ist an einem feststehenden Teil befestigbar. Das feststehende Teil kann beispielsweise als feststehendes Teil der Kupplungsvorrichtung oder als Gehäuse der Kupplungsvorrichtung bzw. als Gehäuse eines angrenzenden Getriebes ausgebildet sein. Das Getriebegehäuse kann hierfür beispielsweise eine Kupplungsglocke aufweisen, in der die Kupplungsvorrichtung angeordnet ist. Der feststehende Teil der Kupplungsvorrichtung kann beispielsweise als Kupplungszylinder ausgebildet sein. Erfindungsgemäß ist die Aussparung für das Sensorteil derart ausgebildet, dass das Sensorteil von außen durch die Aussparung des Gehäuses an der Kupplungsvorrichtung positionierbar und an dem feststehenden Teil lösbar befestigbar ist. Durch den im bzw. am Sensorteil angeordneten Sensor wird die Position eines Sensorgebers, welcher an dem beweglichen Teil der Kupplungsvorrichtung angeordnet ist, erfasst. Der Sensorgeber kann beispielsweise als Magnetelement und der Sensor als induktiver Sensor ausgebildet sein. Die Position des Sensorgebers kann durch den Sensor berührungslos erfasst werden.

In einer bevorzugten Ausführungsform der erfindungsgemäßen Sensoranordnung ist das Sensorteil als Sensorarm ausgebildet und umfasst zumindest eine Signalleitung und einen Verbindungsabschnitt, wobei die Signalleitung zwischen dem Sensor einerseits und dem Verbindungsabschnitt andererseits innerhalb des Sensorarms und/oder an dem Sensorarm anliegend angeordnet ist.

In einer besonders bevorzugten Ausführungsform der erfindungsgemäßen Sensoranordnung ist das als Sensorarm ausgebildete Sensorteil derart ausgebildet, dass im Einbauzustand des Sensorarms die Aussparung des Gehäuses verschlossen und die Position des beweglichen Teils der Kupplungsvorrichtung durch den im bzw. am Sensorarm angeordneten Sensor sicher erfassbar ist. Durch das Verschließen der Aussparung des Gehäuses durch den Sensorarm kann verhindert werden, dass Kupplungsstaub aus dem Kupplungsraum nach außen gelangen kann.

In einer vorteilhaften Ausführungsform der erfindungsgemäßen Sensoranordnung umfasst das Sensorteil ein Kabel, wobei ein Kabelende mit dem Sensorteil verbunden ist und das andere Kabelende einen Verbindungsabschnitt aufweist. Das mit dem Sensorteil verbundene Kabelende ist beispielsweise in das Sensorteil eingegossen und mit dem Sensor elektrisch verbunden, beispielsweise verlötet. Das den Verbindungsabschnitt aufweisende Kabelende ist durch die Aussparung des Gehäuses geführt, wobei der Verbindungsabschnitt in einer vorbestimmten Position fixierbar ist, beispielsweise durch eine entsprechende Halte- bzw. Verriegelungsvorrichtung.

Gemäß einer weiteren Ausführungsform der erfindungsgemäßen Sensoranordnung ist eine elektrische Verbindung zwischen dem Verbindungsabschnitt des Sensorteils und einem elektronischen Steuergerät über eine Aufbau- und Verbindungstechnik realisierbar. Vorteilhafterweise sind das elektronische Steuergerät und die Aufbau- und Verbindungstechnik in einem Getriebestellerdeckel angeordnet und die elektrische Verbindung zwischen dem Verbindungsabschnitt des Sensorteils und der Aufbau- und Verbindungstechnik ist bei der Montage des Getriebestellerdeckels herstellbar, wodurch der Sensor über die Aufbau- und Verbindungstechnik mit dem elektronischen Steuergerät elektrisch verbunden wird. Der Getriebestellerdeckel kann beispielsweise aus Aluminium gefertigt sein.

In einer besonders bevorzugten Ausführungsform der erfindungsgemäßen Sensoranordnung ist die Aussparung im Gehäuse durch den Getriebestellerdeckel hermetisch verschließbar. Somit kann sichergestellt werden, dass weder Verschmutzungen noch Feuchtigkeit in den Kupplungsraum eindringen können, ohne dass ein zusätzlicher Deckel zum Verschließen der Aussparung benötigt wird. Der Montage- und Logistikaufwand kann daher entsprechend verringert werden.

Durch die erfindungsgemäße Sensoranordnung ist der Sensor zur Erfassung der Position des beweglichen Teils der Kupplungsvorrichtung von außen frei zugänglich, wenn der Getriebestellerdeckel abgenommen wird. Im Servicefall kann der Sensor somit ausgetauscht werden, ohne dass das an einer Antriebseinheit angeflanschte Getriebe ausgebaut werden muss.

Die erfindungsgemäße Kupplungsvorrichtung, wie beispielsweise eine Kupplungsvorrichtung in einem Kraftfahrzeug, weist eine Sensoranordnung der zuvor beschriebenen erfindungsgemäßen Art auf.

Im Folgenden wird das Grundprinzip der Erfindung, welche mehrere Ausführungsformen zulässt, an Hand einer Zeichnung beispielhaft näher erläutert.
Es zeigen:
- Fig. 1: eine Seitenansicht einer Ausführungsform der erfidungsgemäßen Sensoranordnung für eine Kupplungsvorrichtung in teilweise geschnittener Darstellung,
- Fig. 2: die Sensoranordnung nach Fig. 1 mit einem montierten Getriebestellerdeckel und
- Fig. 3: eine Seitenansicht einer weiteren Ausführungsform der erfindungsgemäßen Sensoranordnung für eine Kupplungsvorrichtung in teilweise geschnittener Darstellung.

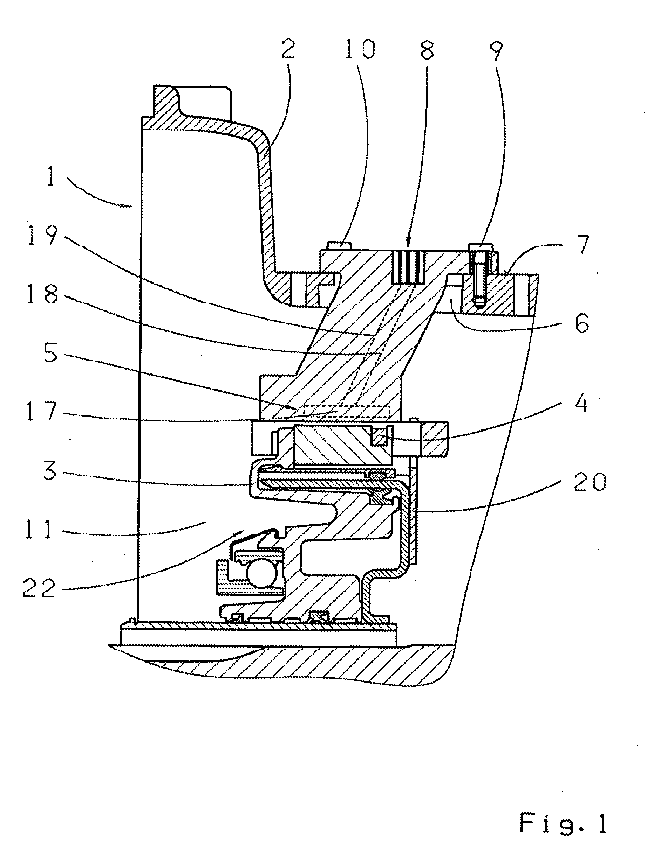

Die Fig. 1 zeigt eine Ausführungsform der erfindungsgemäßen Sensoranordnung 1. Ein Sensorteil 5 ist als Sensorarm ausgebildet und umfasst einen Sensor 17, Signalleitungen 18, 19 und einen Verbindungsabschnitt 8. Der Sensor 17 kann beispielsweise als induktiver Sensor ausgebildet sein. Über Signalleitungen 18, 19 ist der Sensor 17 mit dem Verbindungsabschnitt 8 verbunden, wobei die Signalleitungen 18, 19 zwischen dem Sensor 17 einerseits und dem Verbindungsabschnitt 8 andererseits innerhalb des Sensorarms 5 angeordnet sind. Die Signalleitungen 18, 19 könnten grundsätzlich auch außen an dem Sensorarm 5 anliegend angeordnet sein, wobei die innen liegende Anordnung eine sicherere Übertragung sowie eine geringere Beschädigungsgefahr gewährleistet.

Eine Kupplungsvorrichtung 22 weist einen feststehenden Teil 20 und einen beweglichen Teil 3 auf, wobei der feststehende Teil 20 als Kupplungszylinder und der bewegliche Teil 3 als axial verschiebbarer Kupplungskolben zur Kupplungsbetätigung ausgebildet ist. Des Weiteren weist der Kupplungskolben 3 einen Sensorgeber 4 auf. Der Sensorgeber 4 besteht vorzugsweise aus einem Magnetelement, welches beispielsweise würfelförmig ausgebildet ist. Der Sensorgeber 4 ist hier an dem Kupplungskolben 3 bewegungsverkoppelt angeordnet. Bei einer axialen Bewegung des Kupplungskolbens 3 wirkt der Sensorgeber 4 mit dem Sensor 17 derart zusammen, dass über die Signalleitungen 18, 19 ein die axiale Position des Sensorgebers 4 und somit des Kupplungskolbens 3 repräsentierendes elektrisches Signal an ein elektronisches Steuergerät (hier nicht dargestellt) übertragen wird.

Der Sensorarm 5 ist an bzw. in einem Gehäuse 2 angeordnet, wobei das Gehäuse 2 hier als Getriebe- bzw. Kupplungsgehäuse ausgebildet ist. Das Getriebe- bzw. Kupplungsgehäuse 2 ist gegenüber anderen Teilen des Getriebes oder der Kupplung als feststehendes Teil ausgebildet und weist eine Aussparung 6 für den Sensorarm 5 auf. Die Aussparung 6 ist derart ausgebildet, dass der Sensorarm 5 von außen durch die Aussparung 6 des Getriebe- bzw. Kupplungsgehäuses 2 an der Kupplungsvorrichtung 22 positionierbar ist. Der Sensorarm 5 erstreckt sich hierbei durch einen Kupplungsraum 11 bis zum Sensorgeber 4. Der Sensorarm 5 ist an dem Getriebe- bzw. Kupplungsgehäuse 2 über entsprechende Befestigungselemente 9, 10 befestigt, welche hier vorzugsweise als Schraubverbindungen ausgebildet sind. Der Sensorarm 5 ist derart ausgebildet, dass er im Einbauzustand die Aussparung 6 des Getriebe- bzw. Kupplungsgehäuses 2 verschließt. Hierbei liegt der Sensorarm 5 an einer Anlagefläche 7 des Gehäuses 2 an, welche beispielsweise als Getriebestellerflanschfläche ausgebildet sein kann.

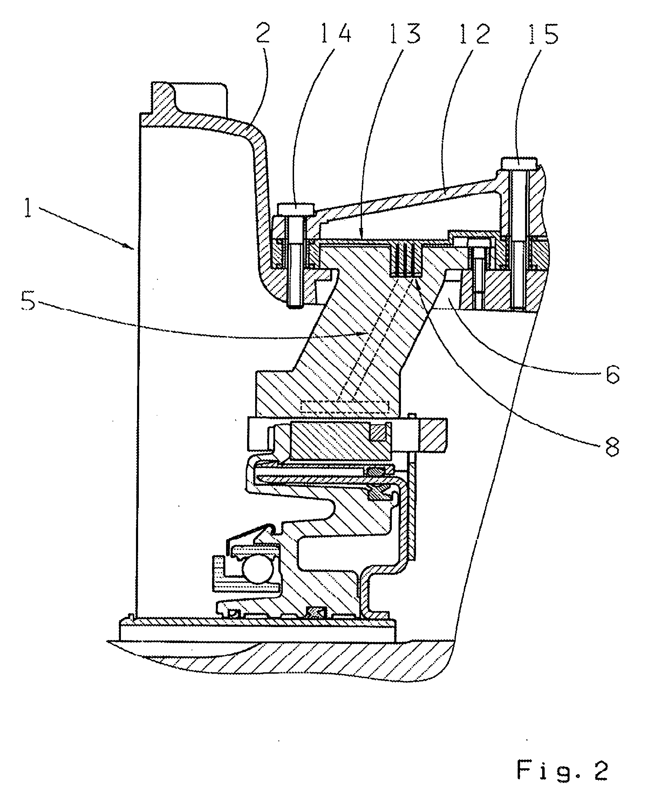

Die Fig. 2 zeigt die in der Fig. 1 beschriebene Sensoranordnung 1, wobei eine elektrische Verbindung zwischen dem Verbindungsabschnitt 8 des Sensorarms 5 und einem elektronischen Steuergerät (hier nicht dargestellt) über eine Aufbau- und Verbindungstechnik 13 realisiert ist. Das elektronische Steuergerät und die Aufbau- und Verbindungstechnik 13 sind vorzugsweise in einem Getriebestellerdeckel 12 angeordnet. Der Verbindungsabschnitt 8 und der dazu korrespondierende Abschnitt der Aufbau- und Verbindungstechnik 13 sind zueinander derart angeordnet, dass bei einer Montage des Getriebestellerdeckels 12 die elektrische Verbindung zwischen dem Verbindungsabschnitt 8 des Sensorarms 5 und der Aufbau- und Verbindungstechnik 13 hergestellt wird. Des Weiteren wird hier die Aussparung 6 im Getriebe- bzw. Kupplungsgehäuse 2 durch den Getriebestellerdeckel 12 hermetisch verschlossen, wobei der Getriebestellerdeckel 12 über entsprechende Verbindungselemente 14, 15 mit dem Getriebe- bzw. Kupplungsgehäuse 2 verbindbar ist, vorzugsweise über Schraubverbindungen.

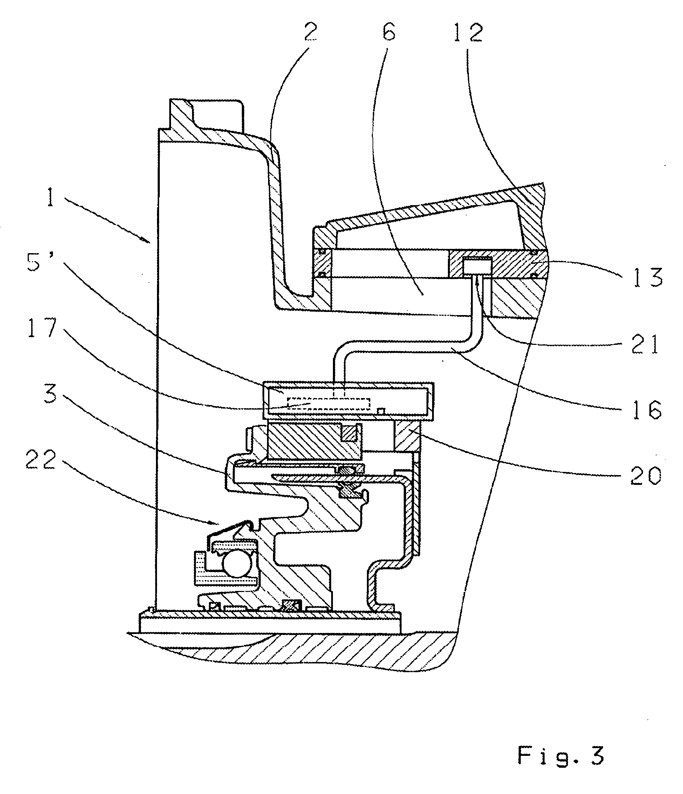

Die Fig. 3 zeigt eine weitere Ausführungsform der erfindungsgemäßen Sensoranordnung 1. Ein Sensorteil 5' ist hier an dem Kupplungszylinder 20 der Kupplungsvorrichtung 22 lösbar befestigt, beispielsweise über Schraubverbindungen (hier nicht dargestellt). Auch in dieser Ausführungsform der erfindungsgemäßen Sensoranordnung 1 ist die Aussparung 6 im Getriebe- bzw. Kupplungsgehäuse 2 derart ausgebildet, dass das Sensorteil 5' von außen an dem Kupplungszylinder 20 montiert bzw. demontiert werden kann. Das Sensorteil 5' umfasst hier ein Kabel 16, wobei ein Kabelende mit dem Sensorteil 5' verbunden ist und das andere Kabelende einen Verbindungsabschnitt 21 aufweist. Das mit dem Sensorteil 5' verbundene Kabelende ist beispielsweise in das Sensorteil 5' eingegossen und mit dem Sensor 17 entsprechend elektrisch verbunden, beispielsweise verlötet. Das den Verbindungsabschnitt 21 aufweisende Kabelende ist durch die Aussparung 6 des Getriebe- bzw. Kupplungsgehäuses 2 geführt, wobei der Verbindungsabschnitt 21 in einer vorbestimmten Position fixierbar ist, beispielsweise durch eine entsprechende Haltevorrichtung. Analog zur Beschreibung der Fig. 2 wird auch bei dieser Ausführungsform die elektrische Verbindung zwischen dem Verbindungsabschnitt 21 des Sensorteils 5' und der elektronischen Steuereinheit (hier nicht dargestellt) über die Aufbau- und Verbindungstechnik 13 bei der Montage des Getriebestellerdeckels 12 hergestellt und die Aussparung 6 durch den Getriebestellerdeckel 12 hermetisch verschlossen.

### Bezugszeichen

- 1: Sensoranordnung
- 2: feststehendes Teil, Getriebe- bzw. Kupplungsgehäuse
- 3: bewegliches Teil, Kupplungskolben
- 4: Sensorgeber
- 5: Sensorteil, Sensorarm
- 5': Sensorteil
- 6: Sensordurchbruch, Aussparung
- 7: Getriebestellerflanschfläche
- 8: Verbindungsabschnitt
- 9: Verschraubung
- 10: Verschraubung
- 11: Kupplungsraum
- 12: Getriebestellerdeckel
- 13: Aufbau- und Verbindungstechnik
- 14: Verschraubung
- 15: Verschraubung
- 16: Kabel
- 17: Sensor
- 18: Signalleitung
- 19: Signalleitung
- 20: feststehendes Teil, Kupplungszylinder
- 21: Verbindungsabschnitt
- 22: Kupplungsvorrichtung

## Patentansprüche

1. Sensoranordnung (1) für eine Kupplungsvorrichtung (22) umfassend ein Gehäuse (2) und ein Sensorteil (5, 5') mit zumindest einem Sensor (17) zur Erfassung der Position eines beweglichen Teils (3) der Kupplungsvordchtung (22), wobei das Gehäuse (2) eine Aussparung (6) für das Sensorteil (5, 5') aufweist und das Sensorleil (5, 5') an einem feststehenden Teil (2, 20) befestigbar ist, und wobei der feststehende Teil (20) der Kupplungsvorrichtung (22) als Kupplungszylinder und der bewegliche Teil (3) der Kupplungsvorrichtung (22) als axial verschiebbarer Kupplungskolben zur Kupplungsbetätigung ausgebildet ist, **dadurch gekennzeichnet, dass** die Aussparung (6) für das Sensorteil (5, 5') derart ausgebildet ist, dass das Sensorteil (5, 5') von außen durch die Aussparung (6) des Gehäuses (2) an der Kupplungsvorrichtung (22) positionierbar und an dem feststehenden Teil (2, 20) lösbar befestigbar ist.

2. Sensoranordnung (1) nach Anspruch 1, **dadurch gekennzeichnet, dass** das Sensorteil (5) als Sensorarm ausgebildet ist und zumindest eine Signalleitung (18, 19) und einen Verbindungsabschnitt (8) umfasst, wobei die Signalleitung (18, 19) zwischen dem Sensor (17) einerseits und dem Verbindungsabschnitt (8) andererseits innerhalb des Sensorarms und/oder an dem Sensorarm anliegend angeordnet ist.

3. Sensoranordnung (1) nach Anspruch 2, **dadurch gekennzeichnet, dass** der Sensorarm (5) derart ausgebildet ist, dass im Einbauzustand des Sensorarms (5) die Aussparung (6) des Gehäuses (2) verschlossen und die Position des beweglichen Teils (3) durch den im bzw. am Sensorarm (5) angeordneten Sensor (17) sicher erfassbar ist.

4. Sensoranordnung (1) nach Anspruch 1, **dadurch gekennzeichnet, dass** das Sensorteil (5') ein Kabel (16) umfasst, wobei ein Kabelende mit dem Sensorteil (5') verbunden ist und das andere Kabelende einen Verbindungsabschnitt (21) aufweist.

5. Sensoranordnung (1) nach Anspruch 4, **dadurch gekennzeichnet, dass** das mit dem Sensorteil (5') verbundene Kabelende in das Sensorteil (5') eingegossen und mit dem Sensor (17) elektrisch verbunden ist und das den Verbindungsabschnitt (21) aufweisende Kabelende durch die Aussparung (6) des Gehäuses (2) geführt ist, wobei der Verbindungsabschnitt (21) in einer vorbestimmten Position fixierbar ist

6. Sensoranordnung (1) nach wenigstens einem der Ansprüche 1 bis 5, **dadurch gekennzeichnet, dass** eine elektrische Verbindung zwischen dem Verbindungsabschnitt (8, 21) des Sensorteils (5, 5') und einem elektronischen Steuergerät über eine Aufbau- und Verbindungstechnik (13) realisierbar ist.

7. Sensoranordnung (1) nach Anspruch 6, **dadurch gekennzeichnet, dass** das elektronische Steuergerät und die Aufbau- und Verbindungstechnik (13) in einem Getriebestellerdeckel (12) angeordnet sind und die elektrische Verbindung zwischen dem Verbindungsabschnitt (8, 21) des Sensorteils (5, 5') und der Aufbau- und Verbindungstechnik (13) bei der Montage des Getriebestellerdeckels (12) herstellbar ist.

8. Sensoranordnung (1) nach Anspruch 7 **dadurch gekennzeichnet, dass** die Aussparung (6) im Gehäuse (2) durch den Getriebestellerdeckel (12) hermetisch verschließbar ist.

9. Sensoranordnung (1) nach wenigstens einem der vorangegangenen Ansprüche, **dadurch gekennzeichnet, dass** das feststehende Teil (2, 20) als feststehendes Teil (20) der Kupplungsvorrichtung (22) oder als Gehäuse (2) der Kupplungsvonichtung (22) bzw. eines angrenzenden Getriebes ausgebildet ist.

10. Kupplungsvorrichtung (22) mit einer Sensoranordnung (1) nach wenigstens einem der vorangegangenen Ansprüche.

## Claims

1. Sensor arrangement (1) for a clutch device (22), comprising a housing (2) and a sensor component (5, 5') having at least one sensor (17) for sensing the position of a movable part (3) of the clutch device (22), wherein the housing (3) has a cutout (6) for the sensor component (5, 5'), and the sensor component (5, 5') can be attached to a fixed component (2, 20), and wherein the fixed component (20) of the clutch device (22) is embodied as a clutch cylinder, and the movable component (3) of the clutch device (22) is embodied as an axially displaceable clutch piston for activating the clutch, **characterized in that** the cutout (6) for the sensor component (5, 5') is embodied in such a way that the sensor component (5, 5') can be positioned from the outside by the cutout (6) of the housing (2) on the clutch device (22) and can be releasably attached to the fixed component (2, 20).

2. Sensor arrangement (1) according to Claim 1, **characterized in that** the sensor component (5) is embodied as a sensor arm and comprises at least one signal line (18, 19) and a connection section (8), wherein the signal line (18, 19) is arranged between the sensor (17), on the one hand, and the connecting section (8), on the other, within the sensor arm and/or bearing on the sensor arm.

3. Sensor arrangement (1) according to Claim 2, **characterized in that** the sensor arm (5) is embodied in such a way that, in the installed state of the sensor arm (5), the cutout (6) of the housing (2) is closed and the position of the movable component (3) can be reliably sensed by the sensor (17) which is arranged in or on the sensor arm (5).

4. Sensor arrangement (1) according to Claim 1, **characterized in that** the sensor component (5') comprises a cable (16), wherein one end of the cable is connected to the sensor component (5') and the other end of the cable has a connecting section (21).

5. Sensor arrangement (1) according to Claim 4, **characterized in that** the end of the cable which is connected to the sensor component (5') is cast into the sensor component (5') and is electrically connected to the sensor (17), and the end of the cable which has the connecting section (21) is guided through the cutout (6) of the housing (2), wherein the connecting section (21) can be secured in a predetermined position.

6. Sensor arrangement (1) according to at least one of Claims 1 to 5, **characterized in that** an electrical connection can be implemented between the connecting section (8, 21) of the sensor component (5, 5') and an electronic control unit by means of construction and connection technology (13).

7. Sensor arrangement (1) according to Claim 6, **characterized in that** the electronic control unit and the construction and connection technology (13) are arranged in a transmission actuator cover (12), and the electrical connection can be produced between the connecting section (8, 21) of the sensor component (5, 5') and the construction and connection technology (13) during the mounting of the transmission actuator cover (12).

8. Sensor arrangement (1) according to Claim 7, **characterized in that** the cutout (6) in the housing (2) can be hermetically sealed by the transmission actuator cover (12).

9. Sensor arrangement (1) according to at least one of the preceding claims, **characterized in that** the fixed component (2, 20) is embodied as a fixed part (20) of the clutch device (22) or as a housing (2) of the clutch device (22) or of an adjoining transmission.

10. Clutch device (22) having a sensor arrangement (1) according to at least one of the preceding claims.

## Revendications

1. Agencement de capteur (1) pour un dispositif d'embrayage (22), comprenant un boîtier (2) et une partie de capteur (5, 5') avec au moins un capteur (17) pour détecter la position d'une partie mobile (3) du dispositif d'embrayage (22), le boîtier (2) présentant un évidement (6) pour la partie de capteur (5, 5') et la partie de capteur (5, 5') pouvant être fixée sur une partie fixe (2, 20), et la partie fixe (20) du dispositif d'embrayage (22) étant réalisée sous forme de cylindre d'embrayage et la partie mobile (3) du dispositif d'embrayage (22) étant réalisée sous forme de piston d'embrayage déplaçable axialement pour l'actionnement d'embrayage, **caractérisé en ce que** l'évidement (6) pour la partie de capteur (5, 5') est réalisé de telle sorte que la partie de capteur (5, 5') puisse être positionnée depuis l'extérieur à travers l'évidement (6) du boîtier (2) sur le dispositif d'embrayage (22) et puisse être fixée de manière amovible à la partie fixe (2, 20).

2. Agencement de capteur (1) selon la revendication 1, **caractérisé en ce que** la partie de capteur (5) est réalisée sous forme de bras de capteur et comprend au moins une conduite de signal (18, 19) et une portion de connexion (8), la conduite de signal (18, 19) étant disposée entre le capteur (17) d'une part et la portion de connexion (8) d'autre part à l'intérieur du bras de capteur et/ou en appui contre le bras de capteur.

3. Agencement de capteur (1) selon la revendication 2, **caractérisé en ce que** le bras de capteur (5) est réalisé de telle sorte que dans l'état installé du bras de capteur (5), l'évidement (6) du boîtier (2) soit fermé et que la position de la partie mobile (3) puisse être détectée de manière sûre par le capteur (17) disposé dans ou sur le bras de capteur (5).

4. Agencement de capteur (1) selon la revendication 1, **caractérisé en ce que** la partie de capteur (5') comprend un câble (16), une extrémité de câble étant connectée à la partie de capteur (5') et l'autre extrémité de câble présentant une portion de connexion (21).

5. Agencement de capteur (1) selon la revendication 4, **caractérisé en ce que** l'extrémité de câble connectée à la partie de capteur (5') est noyée dans la partie de capteur (5') et est connectée électriquement au capteur (17), et l'extrémité de câble présentant la portion de connexion (21) est guidée à travers l'évidement (6) du boîtier (2), la portion de connexion (21) pouvant être fixée dans une position prédéterminée.

6. Agencement de capteur (1) selon au moins l'une quelconque des revendications 1 à 5, **caractérisé en ce qu'**une connexion électrique peut être réalisée entre la portion de connexion (8, 21) de la partie de capteur (5, 5') et un appareil de commande électronique par le biais d'une technique de construction et de connexion (13).

7. Agencement de capteur (1) selon la revendication 6, **caractérisé en ce que** l'appareil de commande électronique et la technique de construction et de connexion (13) sont disposés dans un couvercle d'actionneur de transmission (12) et la connexion électrique entre la portion de connexion (8, 21) de la partie de capteur (5, 5') et la technique de construction et de connexion (13) peut être établie lors du montage du couvercle d'actionneur de transmission (12).

8. Agencement de capteur (1) selon la revendication 7, **caractérisé en ce que** l'évidement (6) dans le boîtier (2) peut être fermé hermétiquement par le couvercle d'actionneur de transmission (12).

9. Agencement de capteur (1) selon au moins l'une quelconque des revendications précédentes, **caractérisé en ce que** la partie fixe (2, 20) est réalisée sous forme de partie fixe (20) du dispositif d'embrayage (22) ou sous forme de boîtier (2) du dispositif d'embrayage (22) ou d'une transmission adjacente.

10. Dispositif d'embrayage (22) comprenant un agencement de capteur (1) selon au moins l'une quelconque des revendications précédentes.
